(19) **Europäisches Patentamt**
**European Patent Office**
**Office européen des brevets**

(11) **EP 4 012 643 A1**

(12) **EUROPEAN PATENT APPLICATION**
published in accordance with Art. 153(4) EPC

(43) Date of publication:
**15.06.2022 Bulletin 2022/24**

(21) Application number: **20849396.5**

(22) Date of filing: **23.06.2020**

(51) International Patent Classification (IPC):
**G06Q 40/08** (2012.01)

(52) Cooperative Patent Classification (CPC):
**G06Q 40/08**

(86) International application number:
**PCT/JP2020/024620**

(87) International publication number:
**WO 2021/024633 (11.02.2021 Gazette 2021/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.08.2019 JP 2019146357**

(71) Applicant: **Aioi Nissay Dowa Insurance Co., Ltd.**
**Shibuya-ku**
**Tokyo**
**1508488 (JP)**

(72) Inventors:
• **DOISAKI, Hisashige**
**Tokyo 150-8488 (JP)**

• **TATEGAMI, Susumu**
**Tokyo 150-8488 (JP)**
• **ONUMA, Kensuke**
**Tokyo 150-8488 (JP)**
• **ABE, Tomo**
**Tokyo 150-8488 (JP)**
• **HINOHARA, Hiroyuki**
**Tokyo 150-8488 (JP)**
• **TAMURA, Satoru**
**Tokyo 150-8488 (JP)**

(74) Representative: **Würmser, Julian et al**
**Meissner Bolte Patentanwälte**
**Rechtsanwälte Partnerschaft mbB**
**Postfach 86 06 24**
**81633 München (DE)**

(54) **INFORMATION PROCESSING DEVICE, INFORMATION PROCESSING METHOD, AND PROGRAM**

(57) An information processing device includes: a reception unit that receives event information including an event indicating a driving status of a driver and driver information related to the driver, in one of commercial use and private use of a vehicle; a determination unit that uses a risk based on the event information to determine an insurance premium for the driver or for the vehicle identified by the driver information; and a transmission unit that transmits insurance premium information indicating the determined insurance premium to a processing terminal used by the driver.

Fig. 1

## Description

## Technical Field

The technique disclosed herein relates to an information processing device, an information processing method, and a program.

## Background Art

In recent years, ride sharing has become commonplace and there are various driving statuses such as commercial u se and private use when a driver drives a vehicle. In this case, if conventional insurance is applied, different types of insurance, i.e., the insurance for commercial use and the insurance for private use, are to be applied.
For example, Patent Document 1 discloses that in order to determine whether the insurance for commercial use or the insurance for private use is applied to a driver who uses ride sharing, specific information is displayed indicating that the ride sharing is in use. In other words, when the specific information is displayed, it is determined to be for commercial use, and accidents and the like occurring during that use are covered by the insurance for commercial use.

Citation List

Patent Document

Patent Document 1: U.S. Patent No. 9505494

## Summary

Technical Problem

However, according to the technique described in Patent Document 1, the insurance for commercial use and the insurance for private use are provided independently from each other even for the same driver, and the insurance company needs to identify which type of insurance policy the driver has taken out. In addition, ascertaining the type of insurance policy taken out by the driver becomes complicated, hence it is complicated for the driver to manage the type of insurance. From another perspective, a server of the insurance company needs to manage both types of insurance, i.e., insurance for commercial use and insurance for private use, resulting in the inability to effectively utilize the server resources and also in increased costs of management. Therefore, there is a need to provide insurance suitable for a driver who drives a vehicle, of which status including commercial use or private use changes, and for the vehicle.
The technique disclosed herein has been made in view of the circumstances described above, and an object of the disclosed technique is to provide insurance suitable for a driver who drives a vehicle in which the status changes including for commercial use or private use and for the vehicle.

Solution to Problem

**An** information processing device, which is one aspect of the technique disclosed herein, includes: a reception unit that receives event information including an event indicating a driving status of a driver and driver information related to the driver, in one of commercial use and private use of a vehicle; a determination unit that uses a risk based on the event information to determines an insurance premium for the driver or for the vehicle identified by the driver information; and a transmission unit that transmits insurance premium information indicating the determined insurance premium to a processing terminal used by the driver.

Advantageous Effects of Invention

According to the technique disclosed herein, it is possible to provide insurance suitable for a driver who drives a vehicle of which status including commercial use or private use changes, and for the vehicle.

## Brief Description of Drawings

Fig. 1 is a diagram for explaining an outline of an insurance management system of the present disclosure.

Fig. 2 is a diagram illustrating an example of a hardware configuration of a server 10 according to a first embodiment.

Fig. 3 is a diagram illustrating an example of a hardware configuration of a processing terminal 20 according to the first embodiment.

Fig. 4 is a block diagram illustrating an example of a functional configuration of a first server 10A according to the first embodiment.

Fig. 5 illustrates an example of driver information according to the first embodiment.

Fig. 6 illustrates an example of location-related information according to the first embodiment.

Fig. 7 illustrates an example of event-related information according to the first embodiment.

Fig. 8 is a block diagram illustrating an example of a functional configuration of a second server 10B according to the first embodiment.

Fig. 9 illustrates an example of acceleration-related information according to the first embodiment.

Fig. 10 illustrates an example of status-related information according to the first embodiment.

Fig. 11 illustrates an example of traveling record information according to the first embodiment.

Fig. 12 illustrates examples of coefficients for traveling distance risk according to the first embodiment.

Fig. 13 illustrates examples of coefficients for traveling time risk according to the first embodiment.

Fig. 14 illustrates examples of score coefficients according to the first embodiment.

Fig. 15 is a diagram illustrating an example of a functional configuration of the processing terminal 20 according to the first embodiment.

Fig. 16 illustrates an example of a screen of the processing terminal 20 according to the first embodiment.

Fig. 17 is a sequence diagram about the processing of the insurance management system 1 according to the first embodiment.

Fig. 18 is a flowchart illustrating an example of insurance premium determination processing according to the first embodiment.

**Description of Embodiments**

Embodiments of the disclosure will be described below in detail with reference to the drawings. It is to be noted that the following embodiments are examples for explaining the present invention, and the technique disclosed herein is not limited to the embodiments. In addition, various modifications can be made to the disclosed technique as long as they do not depart from the spirit and scope. Further, those skilled in the art can adopt an embodiment in which elements described below are replaced with their equivalents, and such an embodiment is also included in the scope of the disclosed technique. Furthermore, positional relationships such as up, down, left, and right described as necessary are based on the illustration in the drawings unless otherwise specified. Furthermore, the various dimensional ratios in the drawings are not limited to the ratios illustrated. Further, the same elements are designated by the same reference numerals, and duplicate description will be omitted.

Embodiments of the present disclosure will be described below in detail with reference to the accompanying drawings.

<Outline of System>

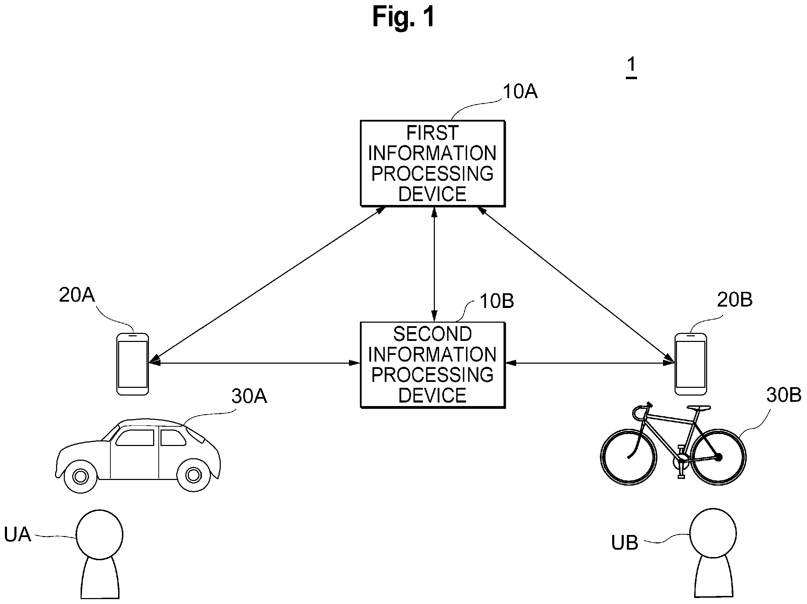

Fig. 1 is a diagram for explaining an outline of an insurance management system of the present disclosure. In the example illustrated in Fig. 1, a driver UA drives a vehicle 30A using an information processing device 20A to provide a ride-sharing service (e.g., Uber, Lift, etc.). Further, a rider (driver) uses an information processing device 20B to pedal a bicycle 30B to provide a delivery service (e.g., Uber Eats, messenger, etc.).

It is to be noted that, when any elements are used in common without distinguishing between them by symbol A and symbol B, A and B are omitted for the elements as described. For example, when the information processing devices 20A and 20B are not distinguished and are collectively expressed, they are referred to as the information processing device(s) 20; when the vehicle 30A and the bicycle 20B are not distinguished and are collectively expressed, they are referred to as the vehicle(s) 30; and when the driver UA and the driver UB are not distinguished and are collectively expressed, they are referred to as the driver(s) U. The number of vehicles 30 is not limited to two, and this system can be used for many vehicles 30.

The information processing device 20 is a device, such as a mobile phone such as a smartphone, a tablet terminal, a personal computer, and an in-vehicle device, for example, including a processor, a memory, and a communication interface, and optionally the GPS (Global Positioning System), an acceleration sensor, and/or an angular velocity sensor.

In an insurance management system 1, the information processing device 20 mounted on the vehicle 30 transmits, to a first information processing device 10A, driver information for identifying the driver U, location-related information including the location and speed of the vehicle 30, and event information including an event indicating the driving status of the driver U. The first information processing device 10A is a server or the like managed by a company that provides a commercial use service to the vehicle 30, and transmits the acquired driver information, location-related information, and event information to a second information processing device 10B. The second information processing device 10B is a server or the like managed by an insurance company, and the second information processing device 10B identifies a risk corresponding to the status of commercial use or private use based on the acquired driver information, location-related information, event information, and the like, and determines an insurance premium based on this risk. For example, the commercial use refers to a state in which an application for providing a service is running (ON) and in which another user boards the vehicle 30 or it can be transitioned to a state in which another user is allowed to board the vehicle 30. Further, for example, the private use refers to a state in which the application for providing the service is not running (OFF) and in which the driver uses the vehicle 30 privately.

In this way, by identifying the risk corresponding to the status of commercial use or private use for the driver U who drives the vehicle 30 or the vehicle 30, it is possible to determine and present a common insurance premium without the driver being aware of whether it is for commercial use or private use. Further, the insurance company can apply a type of insurance in common to one vehicle that is for commercial or private use, and can effectively utilize the server resources managed and operated by the company with the insurance being not complicated, resulting in reducing the increase in management costs. Further, by using the risk corresponding to each status of commercial use or private use, it is possible to estimate an appropriate risk for the driver U or the vehicle 30.

[First Embodiment]

Next, a system configuration for realizing the insurance management system according to a first embodiment will be described with reference to Fig. 1. As illustrated in Fig. 1, the insurance management system 1 is configured in which the information processing device (hereinafter, also referred to as the "processing terminal") 20 used by the driver U, the first information processing device (hereinafter, also referred to as the first server) 10A managed by a company that provides a commercial use service to the vehicle 30, and the second information processing device (hereinafter, also referred to as the "second server") 10B managed by an insurance company are communicatively connected to each other via a network.

It is to be noted that the vehicle 30 itself may be able to communicate data acquired by a sensor or the like to the first information processing device 10A. In the first embodiment, the vehicle 30 will be described by taking the vehicle 30A with which a ride-sharing service is used at the driver end as an example. The vehicle 30A means a vehicle, such as a car, a motorcycle, an airplane, and a helicopter, which can carry a person. When the first server 10A and the second server 10B are not distinguished, they are simply referred to as the server 10.

The processing terminal 20A transmits event information including an event indicating the driving status of the driver UA driving the vehicle 30A to the first server 10A according to the operation of the driver UA. For the vehicle 30A, examples of the event include an event indicating that an application for providing a ride-sharing service (hereinafter, also referred to as the "ride-sharing management application") is turned on, an event indicating to go to pick up a passenger, an event indicating that the passenger has been picked up, and an event indicating that the passenger has dropped off. In the processing terminal 20A, location-related information including the location and speed of the vehicle 30 is transmitted to the first server 10A by means of the ride application. At this time, driver information for identifying the driver UA is also transmitted by the ride-sharing management application.

The first server 10A acquires and manages the driver information, the location-related information, and the event-related information through the ride-sharing management application, and transmits such information to the second server 10B as needed. The first server 10A determines a reward for the driver according to the event information, and/or manages the traveling route by using the location-related information. It is to be noted that the driver information may be hashed and/or converted into other information before being transmitted.

The second server 10B uses the information transmitted from the first server 10A to identify the current status including commercial use or private use according to the change in the event of the vehicle 30A, and obtains a risk corresponding to that status (also referred to as the "status-specific risk") to determine an insurance premium according to that risk. The insurance premium is for a predetermined period, for example, monthly, every six months, or annually. An insurance premium for the next predetermined period is determined using an average risk within a certain period (e.g., one month). Further, the second server 10B may use the location-related information to calculate a traveling record risk by using the traveling distance and traveling time for a predetermined period (e.g., one day) and the status-specific risk, and/or to calculate a traveling score from the speed of the vehicle 30A, a degree of danger of the road on which the vehicle 30A is traveling, and the like. The second server 10B may determine the insurance premium based on the traveling record risk and the driving score.

The second server 10B notifies the processing terminal 20A used by the driver UA of the determined insurance premium, and the processing terminal 20A displays the notified insurance premium on a screen, so that the driver UA is informed of the insurance premium for the driver UA. Further, the second server 10B may provide driving advice to the driver UA by analyzing the driving score. For example, the second server 10B can give the driver UA advice on driving corresponding to each status by analyzing the driving score and the like corresponding to each status.

The network via which each device illustrated in Fig. 1 is connected may be configured to include a plurality of types of communication lines, communication networks, and various network devices. For example, the network includes base stations wirelessly connected to the first server 10A and the second server 10B, a wireless LAN access point (WiFi router, etc.), a mobile communication network connected to the base stations, a telephone line connected to the access points via routers and modems, a public line such as a cable TV line or an optical communication line, the Internet connected to the server 10, a gateway device connecting to the mobile communication network or between the public line and the Internet, and the like.

<Hardware Configuration>

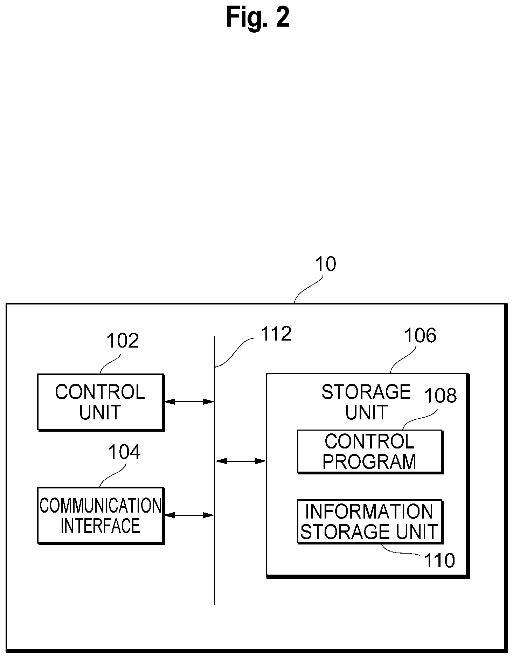

Next, a hardware configuration of each of the devices related to the insurance management system 1 will be described. Fig. 2 is a diagram illustrating an example of the hardware configuration of the server 10 according to the first embodiment.
As illustrated in Fig. 2, the server 10 includes a control unit 102, a communication interface 104, and a storage unit 106, which are connected via a bus line 112.

The control unit 102 includes one or more processors (CPUs (Central Processing Units)), a ROM (Read Only Memory), a RAM (Random Access Memory), and the like. The control unit 102 is also configured to implement various functions by executing an application or the like stored in the storage unit 106. The application is a ride-sharing management application for the server 10 being the first server 10A, and is an application for determining an insurance premium (also referred to as the "insurance premium determination application") for the server 10 being the second server 10B.

The communication interface 104 controls communication with the processing terminal 20 via the network.

The storage unit 106 is composed of, for example, a plurality of large-capacity HDDs, and stores a control program 108 as well as applications and data (not illustrated) for implementing a server function. The storage unit 106 also includes an information storage unit 110.

The control program 108 is a program for executing the ride-sharing management application and/or the insurance premium determination application. For example, for the control program 108 being the insurance premium determination application, the control program 20 recognizes the driving status of the driver based on the information acquired from the first server 10A, and evaluates the traveling record risk based on the status-specific risk.

The information storage unit 110 stores information and the like used for processing of each application. For example, the information storage unit 110 may store a status-specific score, a formula for calculating an insurance premium, a formula for calculating a driving score, and the like for the insurance premium determination application.

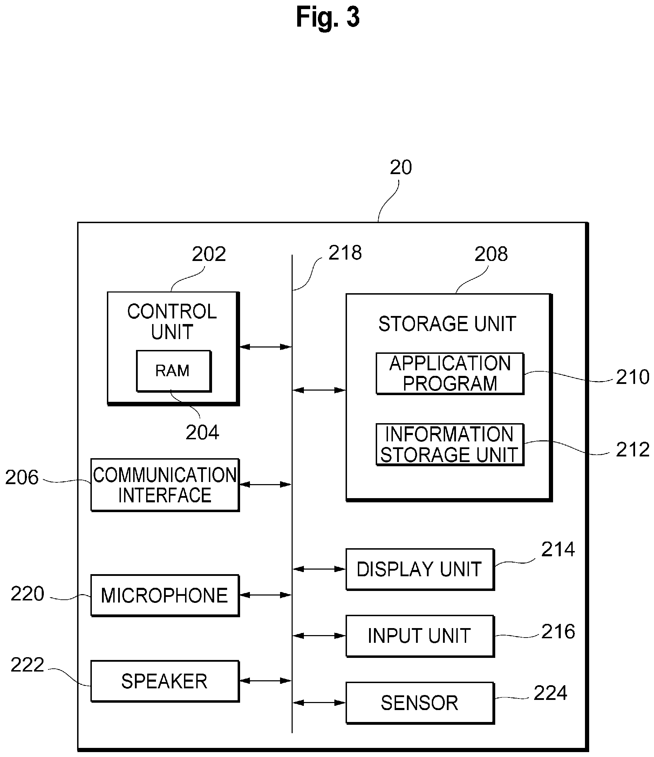

Next, the hardware configuration of the processing terminal 20 will be described. Fig. 3 is a diagram illustrating an example of the hardware configuration of the processing terminal 20 according to the first embodiment. As illustrated in Fig. 3, the processing terminal 20 includes a control unit 202, a communication interface 206, a storage unit 208, a display unit 214, an input unit 216, a microphone 220, a speaker 222, and a sensor 224, which are connected via a bus line 218.

The control unit 202 includes one or more processors (CPUs), a ROM, a RAM 204, and the like. The control unit 202 is configured to implement ride-sharing functions for the driver as well as functions of a general information processing device by executing the application or the like stored in the storage unit 208.

Further, a RAM 204 temporarily holds various information and is used as a work area for the CPU executing various types of processing.

The communication interface 206 controls communication with the server 10 via the network.

The storage unit 208 includes, for example, an HDD and the like, and stores an application program 210 as well as applications and data (not illustrated) for implementing functions of a general information processing device. The storage unit 208 also includes an information storage unit 212.

The application program 210 is a program for executing a ride-sharing management application for the driver. For example, the application program 210 has a route display function, a passenger determination function, an event notification function, and the like. The application program 210 is also a program for transmitting various types of data and requests to the server 10 and receiving various types of data from the server 10.

The information storage unit 212 stores login information for the system, data used for the ride sharing, and the like.

The display unit 214 is a display such as a touch panel or a liquid crystal monitor, and shows information to the driver. For example, the display unit 214 displays an application execution screen, specifically, a map screen including a route, an insurance premium display screen, and the like.

The input unit 216 receives an input from the user and receives an instruction from the user. It is to be noted that the display unit 214 and the input unit 216 may be configured as a touch panel.

A microphone 220 is a device for collecting sound such as voice, and may have a noise canceling function or the like. A speaker 222 is a device for converting voice data into physical vibration to output sound such as voice.

The sensor 224 includes various types of sensors, for example, at least one of the GPS, an acceleration sensor, and an angular velocity sensor. At least one piece of information such as location information, speed information, and acceleration information, sensed by the sensor 224 is transmitted to the first server 10A. It is to be noted that the sensor 224 may be provided on the vehicle 30A as an on-board unit, and the sensed data may be transmitted from the vehicle 30A.

<Functional Configuration>

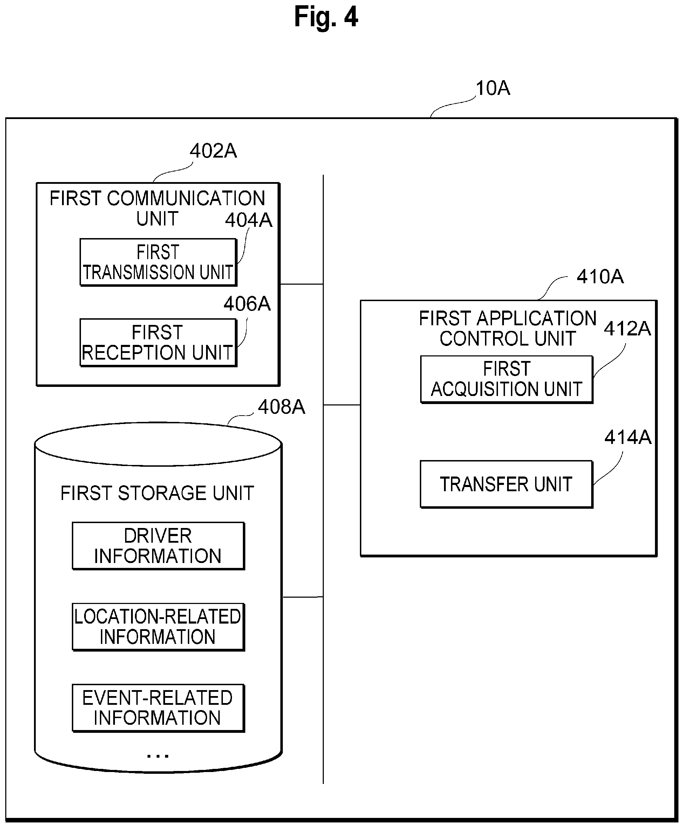

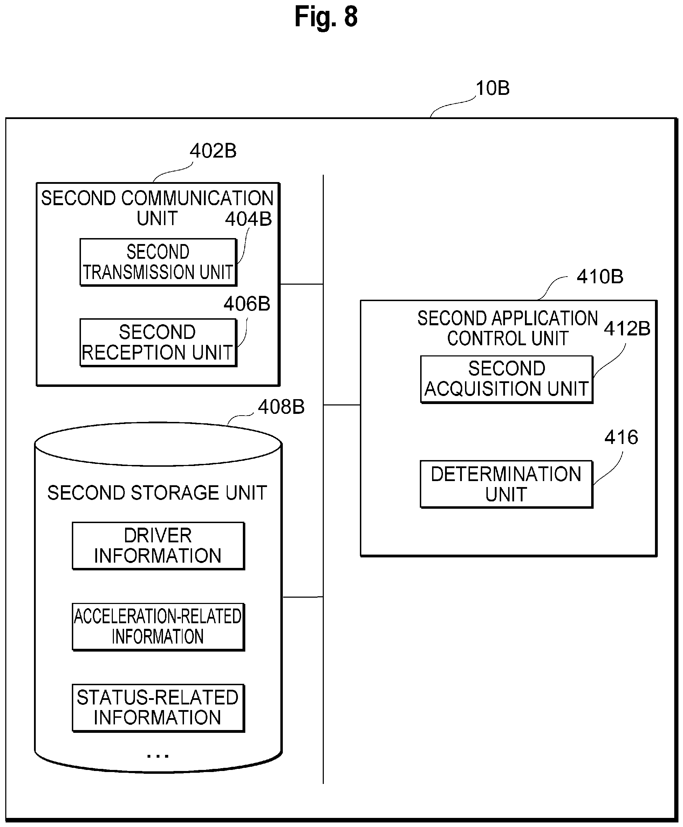

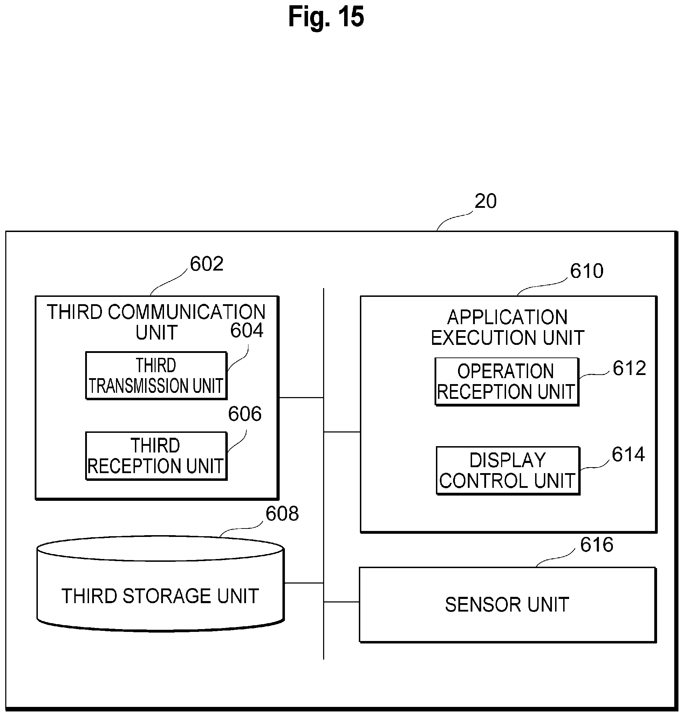

Next, functions of the first server 10A according to the first embodiment will be described with reference to Figs. 4 to 7, functions of the second server 10B will be described with reference to Figs. 8 to 14, and functions of the processing terminal 20 will be described with reference to Figs. 15 to 16. Fig. 4 is a block diagram illustrating an example of a functional configuration of the first server 10A according to the first embodiment. The first server 10A illustrated in Fig. 4 includes a first communication unit 402A, a first storage unit 408A, and a first application control unit 410A.

The first communication unit 402A may be realized by, for example, the control unit 102, the communication interface 104, or the like. The first storage unit 408A may be realized by, for example, the storage unit 106. The first application control unit 410A may be realized, for example, by the control unit 102 executing the control program 108.

The first communication unit 402A communicates with the processing terminal 20 and the second server 10B via the network. For example, a first reception unit 406A supplies the driver information, the location-related information, and the event-related information, which are received from the processing terminal 20 and the like, to the first application control unit 410A. Further, a first transmission unit 404A has a function of transmitting to the second server 10B the data supplied from the first application control unit 410A.

The first storage unit 408A is for storing various types of programs and various types of data. Here, the programs stored in the first storage unit 408A are programs related to the ride sharing. The first storage unit 408A also stores data related to the ride sharing, display data, data of various calculation results, and the like.

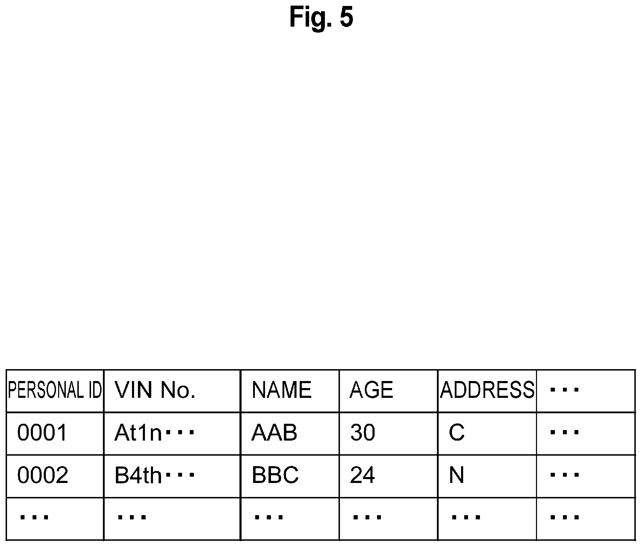

For example, the first storage unit 408A stores the driver information, the location-related information, the event-related information, and the like. These pieces of information may be physically stored in another storage unit, or may be stored in areas into which one storage unit is logically divided. Details of each piece of information stored in the first storage unit 408A will be described below with reference to Figs. 5 to 7. It is to be noted that the first storage unit 408A may be a database separate from the first server 10A.

When explaining the ride sharing in the first embodiment by way of example, the first application control unit 410A includes a functional module for the driver and a functional module for the passenger. The first application control unit 410A is also configured to provide a ride-sharing service and includes a first acquisition unit 412A and a transfer unit 414A. The functional modules may be realized by the above-mentioned various types of programs executed by the control unit 102, or may be implemented in the control unit 102 as firmware.

The first acquisition unit 412A acquires predetermined information from the first storage unit 408A. The acquired information is used by the first application control unit 410A for processing related to the ride sharing.

The transfer unit 414A performs transfer control so as to transmit the predetermined information acquired by the first acquisition unit 412A to the second server 10B via the first transmission unit 404A. At this time, the transfer unit 414A may hash the driver information from the viewpoint of security or convert the driver information into other information according to a rule common to the second server 10B, and then transmit the resulting information. The predetermined information is, for example, the driver information and the event-related information, and may include the location-related information.

Fig. 5 illustrates an example of the driver information according to the first embodiment. In the example illustrated in Fig. 5, the driver information is information including the driver's personal ID, name, age, address, and the like. Further, the driver information may include one or more pieces of VIN (Vehicle Identification Number) information indicating the vehicle identification information of the vehicle used by the driver.

The personal ID is an ID for logging in to the ride-sharing management application to use the ride sharing, and is also an ID set for the driver when subscribing to this service. The VIN information is information for identifying the vehicle, the name represents the driver's name, and the address indicates the address where the driver lives. The address may be the area where the driver lives.

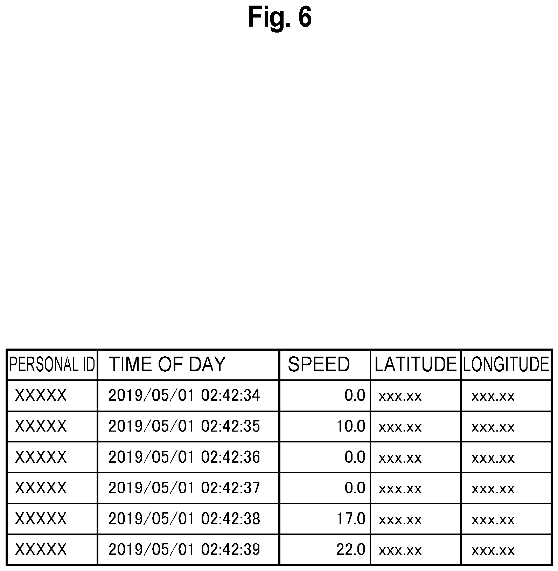

Fig. 6 illustrates an example of the location-related information according to the first embodiment. In the example illustrated in Fig. 6, the location-related information includes pieces of information: personal ID, time information, speed, latitude, and longitude. Further, the location-related information may include information, such as a road type (expressway or general road) and traffic conditions (traffic jam, etc.), associated with latitude and longitude information which may be acquired from a map information providing application or the like.

The personal ID is the same as the above-mentioned personal ID, and is an ID for logging in to the ride-sharing management application to use the ride sharing. The time information is time information indicating the time of day at a predetermined time point, the speed information is, for example, the speed at a predetermined time point, and the latitude and longitude information is location information indicating the location at a predetermined time point. The location information is information acquired by the GPS or the like. The predetermined time point may be measured, for example, one time per every second or every few seconds.

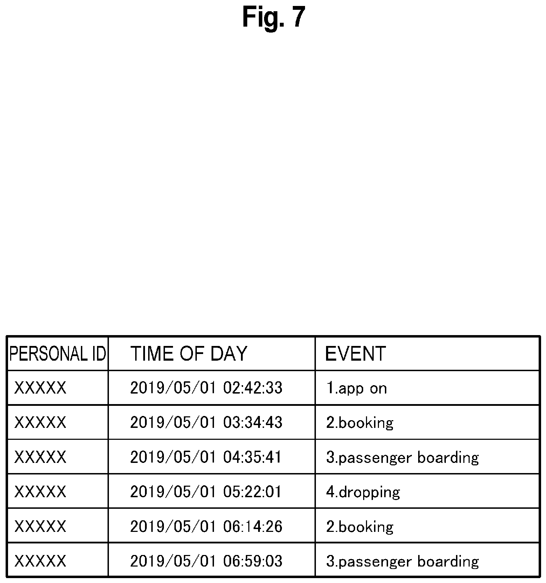

Fig. 7 illustrates an example of the event-related information according to the first embodiment. In the example illustrated in Fig. 7, the event-related information includes pieces of information: personal ID, time, and event.

The personal ID is the same as the above-mentioned personal ID, and is an ID for logging in to the ride-sharing management application to use the ride sharing. The time information is time information indicating the time when the event occurs, and the event information is information indicating an event indicating the driving status of the driver in either commercial use or private use. Examples of the event include "app on" which is an event indicating when the ride-sharing management application is started, "booking" which is an event indicating that a passenger has been booked, "boarding" which is an event indicating that the passenger has boarded, and "dropping" which is an event indicating that the passenger has dropped off.

At least one part of the information illustrated in Figs. 5 to 7 is transmitted to the second server 10B and used to determine an insurance premium for the driver who drives the vehicle using the ride sharing.

Fig. 8 is a block diagram illustrating an example of a functional configuration of the second server 10B according to the first embodiment. The second server 10B illustrated in Fig. 8 includes a second communication unit 402B, a second storage unit 408B, and a second application control unit 410B.

The second communication unit 402B may be realized by, for example, the control unit 102, the communication interface 104, or the like. The second storage unit 408B may be realized by, for example, the storage unit 106. The second application control unit 410B may be realized, for example, by the control unit 102 executing the control program 108.

The second communication unit 402B communicates with the processing terminal 20 and the first server 10A via the network. For example, a second reception unit 406B receives event information including an event indicating the driving status of the driver and driver information related to the driver, in either commercial use or private use of vehicle 30. The second reception unit 406B may also receive the driver information, the location-related information, and the event-related information from the first server 10A. In this case, the second reception unit 406B supplies the driver information, the location-related information, and the event-related information, which are received from the first server 10A and the like, to the first application control unit 410A.

A second transmission unit 404B transmits to the processing terminal 20 the data supplied from the second application control unit 410B. For example, the second transmission unit 404B transmits insurance premium information indicating the insurance premium determined by a determination unit 416, which will be described later, to the processing terminal 20 used by the driver. Further, the insurance premium information may be information including information related to insurance premiums (e.g., risks for determining insurance premiums calculated from various types of data, ranks into which risks are categorized, the content of the insurance contract, and the like).

The second storage unit 408B is for storing various types of programs and various types of data. Here, the programs stored in the second storage unit 408B are programs related to determination of insurance premiums. The second storage unit 408B also stores data related to the ride sharing, data related to determination of insurance premiums, display data, data of various calculation results, and the like.

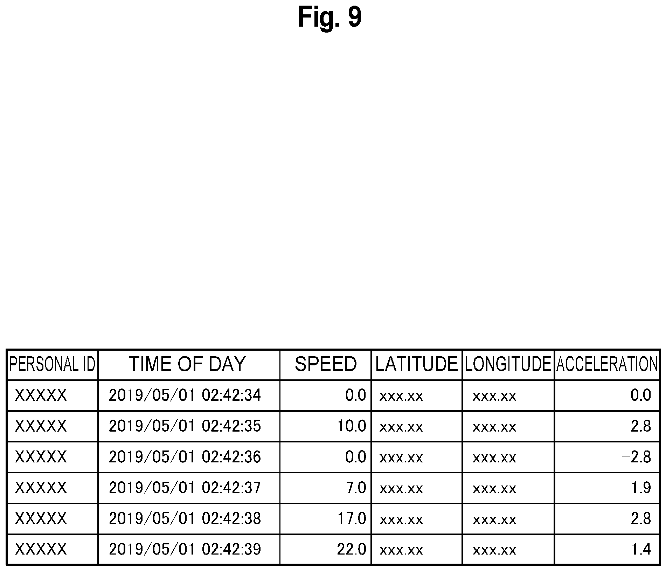

For example, the second storage unit 408B stores driver information, acceleration-related information, status-related information, and the like. These pieces of information may be physically stored in another storage unit, or may be stored in areas into which one storage unit is logically divided. Details of each piece of information stored in the second storage unit 408B will be described with reference to Figs. 9 to 14. The driver information includes information on the driver and is the same as the information illustrated in Fig. 5, but information required by the insurance company may be additionally stored thereto. It is to be noted that the second storage unit 408B may be a database separate from the second server 10B.

Fig. 9 illustrates an example of the acceleration-related information according to the first embodiment. In the example illustrated in Fig. 9, the acceleration-related information includes information on an acceleration in addition to the location-related information illustrated in Fig. 6. The acceleration is calculated by differentiating the speed. It is to be noted that, in the case where the processing terminal 20 includes an acceleration sensor, the second server 10B may acquire the acceleration measured by the acceleration sensor of the processing terminal 20 via the first server 10A.

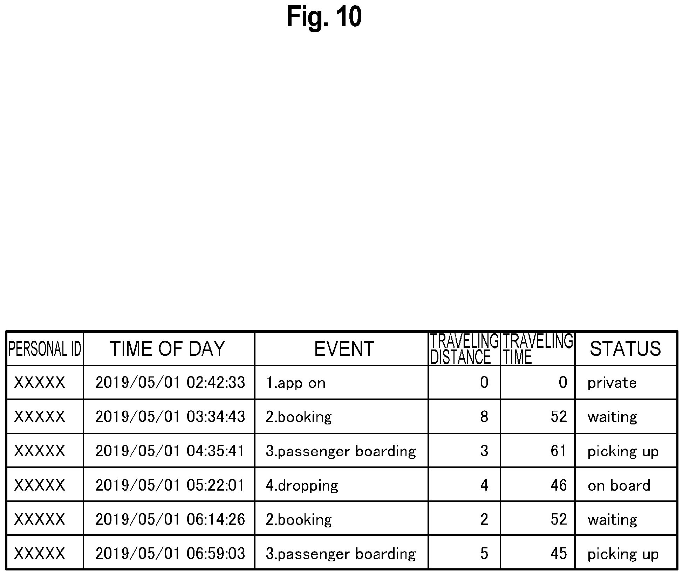

Fig. 10 illustrates an example of the status-related information according to the first embodiment. In the example illustrated in Fig. 10, the status-related information includes information on a status in addition to the event-related information illustrated in Fig. 7. The status is determined according to the transition of the event. For example, the status is determined as follows.

Before "app on" event: private status

From "app on" event to "booking" event: waiting status

From "booking" event to "boarding" event: pick up status

From "boarding" event to "dropping" event: on board status

From "dropping" event to "booking" or "app off" event: waiting status

After "app off" event: private status

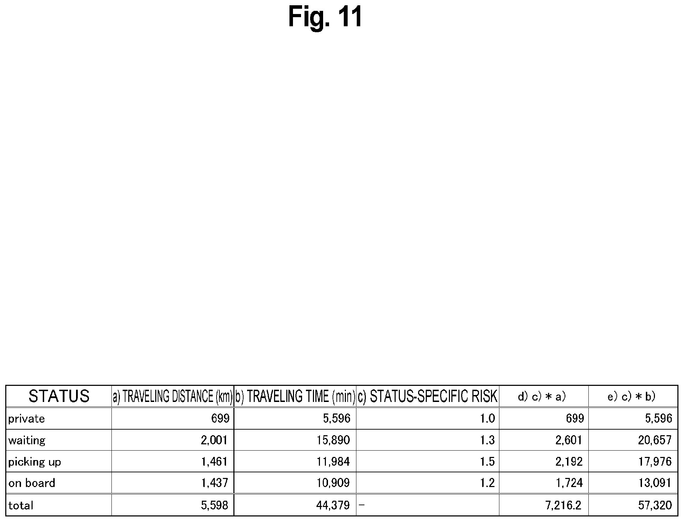

Fig. 11 illustrates an example of traveling record information according to the first embodiment. The traveling record information is stored in, for example, the second storage unit 408B. In the example illustrated in Fig. 11, the traveling record information is associated, for each status, with a traveling distance, a traveling time, a status-specific risk, a traveling distance risk, and a traveling time risk.

The status is determined by the determination unit 416 based on the transition of the event. The traveling distance is a value, for each status, obtained by adding up traveling distances during that status. The traveling time is a value, for each status, obtained by adding up traveling times during that status. The status-specific risk is a value preset for each status and is basically a different value, but those of some statuses may be the same value. The traveling distance risk is a value, for each status, obtained by multiplying the traveling distance by the status-specific risk. The traveling time risk is a value, for each status, obtained by multiplying the traveling time by the status-specific risk.

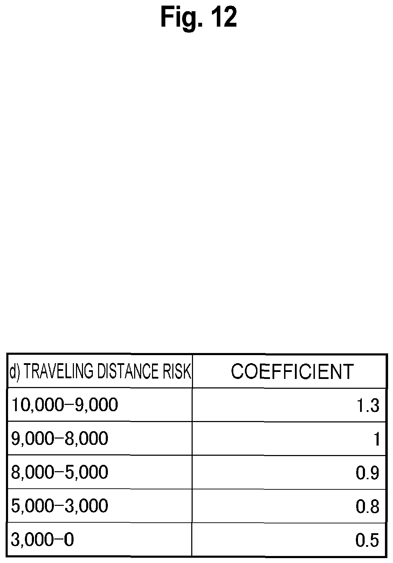

Fig. 12 illustrates examples of coefficients for the traveling distance risk according to the first embodiment. In the example illustrated in Fig. 12, the traveling distance risk is classified into predetermined ranges as sectioned, and a coefficient is associated with each classification range. In the example illustrated in Fig. 12, as the distance risk decreases, the value of the coefficient also decreases.

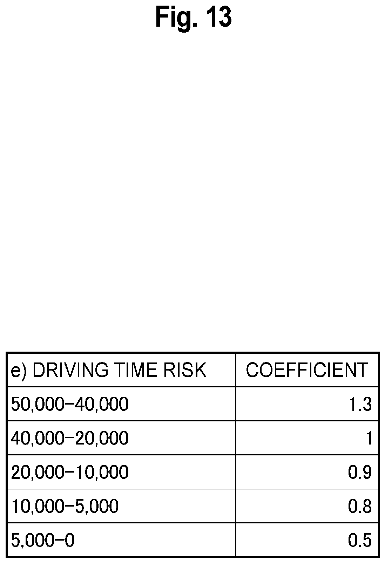

Fig. 13 illustrates examples of coefficients for the traveling time risk according to the first embodiment. In the example illustrated in Fig. 13, the traveling time risk is classified into predetermined ranges as sectioned, and a coefficient is associated with each classification range. In the example illustrated in Fig. 13, as the time risk decreases, the value of the coefficient also decreases.

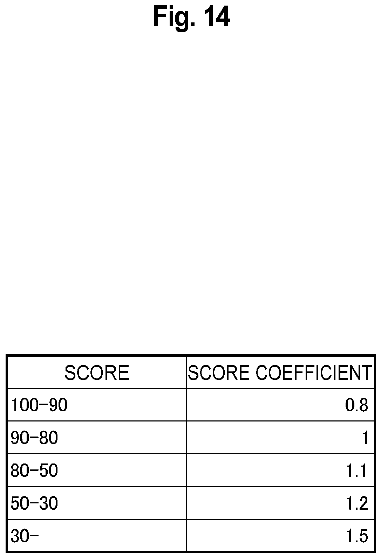

Fig. 14 illustrates examples of score coefficients according to the first embodiment. In the example illustrated in Fig. 14, the driving score is classified into predetermined ranges as sectioned, and a coefficient is associated with each classification range. In the example illustrated in Fig. 14, as the driving score decreases (as the driving skill decreases), the value of the coefficient increases. It is to be noted that the driving score may be calculated using a known technique.

Returning to Fig. 8, the second application control unit 410B includes a functional module for determining the insurance premium in the first embodiment, and includes, for example, a second acquisition unit 412B and the determination unit 416. The functional modules may be realized by the above-mentioned various types of programs executed by the control unit 102, or may be implemented in the control unit 102 as firmware.

The second acquisition unit 412B acquires predetermined information from the second storage unit 408B. The acquired information is used by the second application control unit 410B for processing related to the determination of insurance premiums.

The determination unit 416 uses the risk based on the event information to determine an insurance premium for the driver identified the driver information. For example, the determination unit 416 may determine in advance risks corresponding to events each indicating a driving status, calculate an average risk of the driver according to the frequency of occurrence of each event and the like, and use this average risk to calculate the insurance premium. Specifically, the determination unit 416 may determine the next insurance premium by multiplying a basic premium by a coefficient specified from the average risk. The period for which the insurance premium is to be renewed may be monthly, every few months, annually, or each predetermined date. The insurance premium information indicating the determined insurance premium is transmitted to the processing terminal 20 used by the driver. Further, the determination unit 416 may associate risks with an event indicating private use and an event indicating commercial use, respectively, to determine an insurance premium based on the driving record and risk in private use and the driving record and risk in commercial use.

In this way, by identifying the risk corresponding to the status of commercial use or private use for the driver U who drives the vehicle 30, it is possible to determine a common insurance premium without the driver being aware of whether it is for commercial use or private use. Further, the insurance company can apply a type of insurance in common to one vehicle that is for commercial and private use, and can effectively utilize the server resources managed and operated by the company with the insurance being not complicated, resulting in reducing the increase in management costs.

Further, the commercial use may also include a plurality of different events. For example, events in commercial use include events such as booking, boarding, and dropping, as described above. In this case, the determination unit 416 sets different risks to be applicable to the statuses between the events. For example, a predetermined risk may be set for each status identified according to an event transition, and the determination unit 416 may determine an insurance premium based on the risk identified according to the status. Further, statuses in commercial use may include, for example, a status other than the statuses in private use (e.g., waiting, picking up, and boarding status). In this case, the determination unit 416 may classify the risks into risk in private use and risk in commercial use, and further identify the risk according to each status in commercial use.

In this way, a risk can be set according to a possible status in commercial use, so that it is possible to calculate a more suitable insurance premium. Further, only a plurality of events used for commercial use may be used to determine a suitable insurance premium in commercial use. In this case, general insurance may be applied for private use, and insurance using status-specific risk may be applied for commercial use.

Further, the second reception unit 406B may receive location-related information which is associated with the driver information and includes at least one of time information indicating the time of day at a predetermined time point, speed information indicating the speed of the vehicle at the predetermined time point, and location information indicating the location at the predetermined time point. In this case, the determination unit 416 may determine the risk further based on the location-related information. For example, the determination unit 416 may calculate a driving risk by using an acceleration obtained from the speed of the location-related information and the like. Further, the determination unit 416 may calculate a driving risk by using a road type (expressway or general road), traffic conditions (traffic jam, etc.), and the like, associated with the location-related information. The determination unit 416 may use such a driving risk to determine a final risk.

In this way, a risk can be determined based on the speed, location, and the like included in the location-related information, which makes it possible to determine the risk according to the actual driving and status, so that it is possible to determine a more suitable insurance premium.

Further, the driver information includes attribute information including at least one of the driver's age, gender, and address. Further, the determination unit 416 may determine the risk further based on the attribute information. For example, the determination unit 416 can change the risk according to the address or change the risk according to the age. For example, the determination unit 416 may set risks in such a way that the risk for a driver living in an urban area is higher than the risk for a driver living in a rural area, or the risk is reduced as the age is younger.

In this way, a risk can be determined corresponding to the attribute of the user by using the driver information, so that it is possible to determine a more suitable insurance premium.

The driver information includes first identification information for identifying a vehicle. In this case, the determination unit 416 may use the first identification information to identify the driver. For example, the first identification information is VIN information for identifying a vehicle, and this VIN information may be used to identify the driver.

In this way, it is possible to identify the driver from the VIN information of the vehicle, which complies with general insurance. In general, for automobile insurance, the VIN information of a vehicle is used.

Further, the determination unit 416 may use a driving score of the driver calculated based on the time information and the speed information included in the location-related information to determine the insurance premium. For example, the determination unit 416 may calculate an acceleration by using the time information and the speed information, and obtain the driving score from this acceleration.

In this way, a driving score is obtained using an acceleration, and an insurance premium for the driver is calculated using the driving score, so that it is possible to calculate a more suitable insurance premium.

Further, the driving score may be calculated based on the event information. For example, the determination unit 416 may calculate a driving score for each status between events, and multiply the driving score for each status by the corresponding status-specific risk to calculate a final driving score.

In this way, a driving score is also calculated according to the status, and an insurance premium is calculated using a driving score coefficient based on this driving score, so that it is possible to calculate a more suitable insurance premium.

Further, the determination unit 416 may calculate and determine an insurance premium based on the following Equation (1).

$$\text{next insurance premium} = \text{current insurance premium} \times \text{traveling distance risk}$$

$$\text{coefficient} \times \text{traveling time risk coefficient} \times \text{driving score coefficient} \qquad \text{Equation}$$

$$(1)$$

Further, at least one of the traveling distance risk coefficient, the traveling time risk coefficient, and the driving score coefficient may be multiplied by the current insurance premium. In this way, the next insurance premium can be calculated taking into consideration the comprehensive status-specific risks for the traveling record, so that it is possible to determine a more suitable insurance premium.

Fig. 15 is a diagram illustrating an example of a functional configuration of the processing terminal 20 according to the first embodiment. The processing terminal 20 illustrated in Fig. 15 is an information processing device used by the driver. The processing terminal 20 executes a ride sharing service in response to, for example, the driver UA logging in to the ride-sharing management application, and includes, as functions for that, at least a third communication unit 602, a third storage unit 608, an application execution unit 610, and a sensor unit 616.

The third communication unit 602 communicates with the first server 10A and the second server 10B via the network. For example, a third reception unit 606 supplies data received from the first server 10A and the second server 10B to the application execution unit 610. A third transmission unit 604 transmits the data supplied from the application execution unit 610 to the first server 10A. Specifically, the third communication unit 602 may be composed of at least the communication interface 206 illustrated in Fig. 3 described above.

The third storage unit 608 is for storing various types of programs and various types of data, and may be specifically composed of the storage unit 208 or the like illustrated in Fig. 3 described above. Here, a program stored in the third storage unit 608 is the ride-sharing management application for the driver. The third storage unit 608 also stores data related to such ride sharing, display data, data of various calculation results, and the like.

The application execution unit 610 may be composed of, for example, the control unit 202 or the like. The application execution unit 610 has functions for executing the ride-sharing service. The application execution unit 610 includes, as the functions for executing this ride-sharing service, at least an operation reception unit 612 and a display control unit 614.

The operation reception unit 612 receives operations from the driver. The operation reception unit 612 receives the operation content and information input by the driver via the input unit 216 and/or the microphone 220. For example, the operation reception unit 512 receives an operation to cause each event, such as a driver's operation to start the ride-sharing management application. It is to be noted that, depending on the event, the ride-sharing management application may automatically detect the event. For example, for the "booking" event, when the GPS detects arrival to a predetermined location and that the vehicle has stopped for a predetermined time, the ride-sharing management application recognizes that the "booking" event has occurred.

The display control unit 614 controls the display unit 214 to display a screen related to ride sharing provided by the first server 10A, a screen related to insurance provided by the second server 10B, and the like. The data to be displayed by the display unit 214 may be data acquired by the ride-sharing management application from the first server 10A, or may be data acquired by the insurance premium determination application from the second server 10B.

It is to be noted that the application execution unit 610 resides in the control unit 202 or the like, that is, is running on the backend, even if the driver does not start the ride-sharing management application, and transmits the location-related information and/or the driver information to the first server 10A even before the "app on" event.

The sensor unit 616 includes an acceleration sensor and/or an angular velocity sensor, and senses each data related to the vehicle. The sensor unit 616 may be mounted on the vehicle as an on-board unit, and in that case, the sensed data is transmitted to the first server 10A.

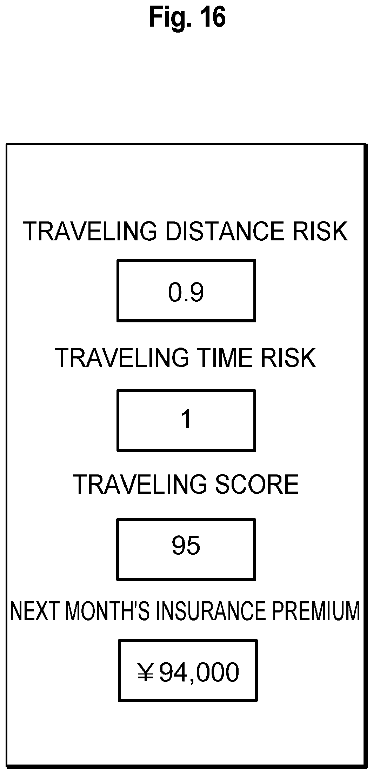

Fig. 16 illustrates an example of a screen of the processing terminal 20 according to the first embodiment. In the example illustrated in Fig. 16, the display control unit 614 of the processing terminal 20 controls the display of the insurance premium information transmitted from the second server 10B on a screen as an insurance premium for the next month. At this time, when information on the traveling distance risk, the traveling time risk, and the driving score is acquired from the second server 10B, the display control unit 614 also controls the display of such information on the screen. It is to be noted that each of the traveling distance, risk, the traveling time risk, and the driving score may be daily information, and the insurance premium may be monthly information.

<Operation Processing>

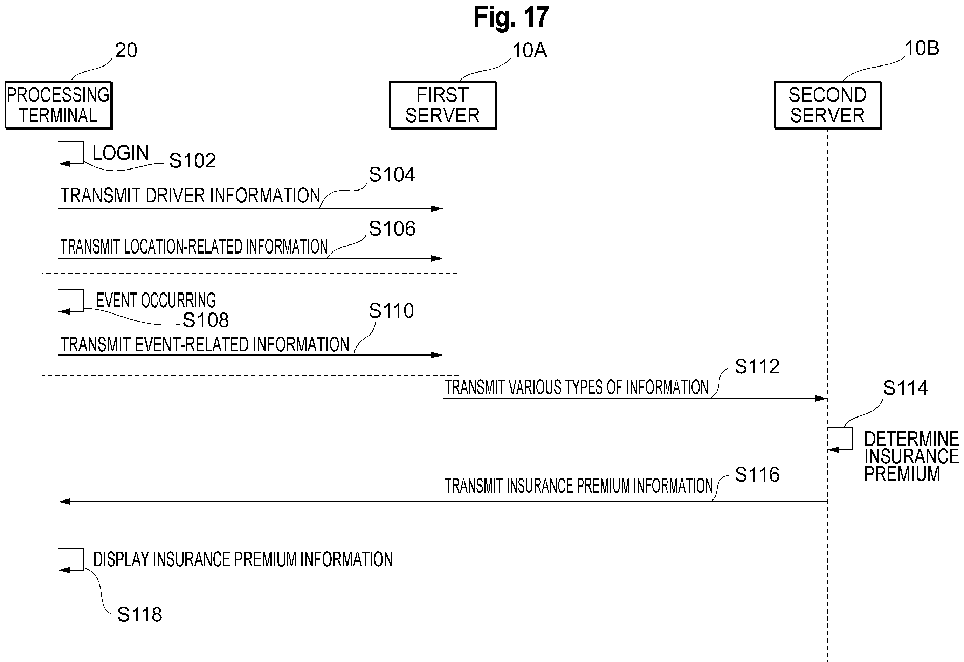

Next, processing of the insurance management system 1 will be described. Fig. 17 is a sequence diagram about the processing of the insurance management system 1 according to the first embodiment. In the example illustrated in Fig. 17, in step S102, the operation reception unit 612 of the processing terminal 20 receives a login operation from the driver, and then the ride-sharing management application is started.

In step S104, the third transmission unit 604 of the processing terminal 20 transmits the driver information to the first server 10A. It is to be noted that, since the ride-sharing management application is running on the backend as described above, the driver information may be transmitted to the first server 10A even before the login operation is received.

In step S106, the third transmission unit 604 of the processing terminal 20 transmits to the first server 10A the location-related information, including the information acquired by the ride-sharing management application executed by the application execution unit 610 and the information acquired by the sensor unit 616. It is to be noted that, since the ride-sharing management application is running on the backend as described above, the location-related information may be transmitted to the first server 10A even before the login operation is received.

In step S108, the operation reception unit 612 of the processing terminal 20 receives an operation, from the driver, which causes an event to occur.

In step S110, the third transmission unit 614 of the processing terminal 20 transmits to the first server 10A the event-related information including the information acquired when the event occurs.

Step S108 and step S110 are executed every time an event occurs, and step S106 is periodically executed at a predetermined timing.

In step S112, the transfer unit 414 of the first server 10A controls the periodic transfer of the driver information, the event-related information, and the location-related information to the second server 10B at a predetermined timing.

In step S114, the determination unit 416 of the second server 10B determines an insurance premium by using the information acquired from the first server 10A. There are various ways to determine the insurance premium, and one of them can be set.

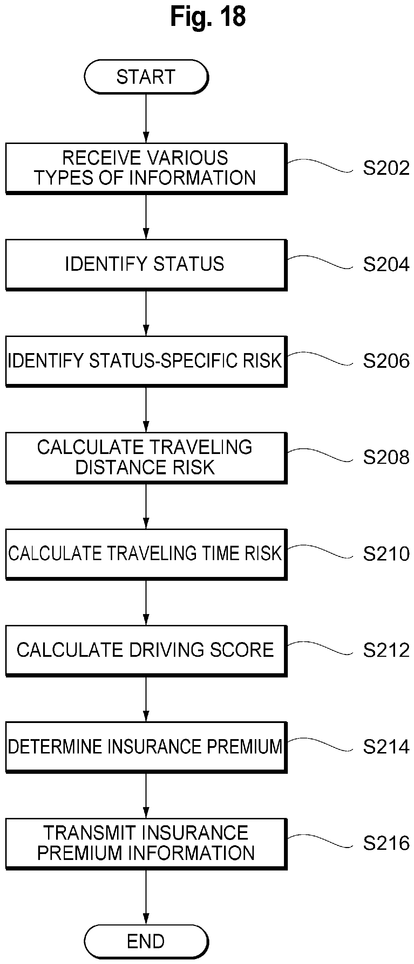

In step S116, the second transmission unit 404B of the second server 10B transmits the insurance premium information to the processing terminal 20. At this time, if the traveling distance risk coefficient, the traveling time risk coefficient, and/or the driving score are calculated, such values may be transmitted. In this way, the driver can grasp today's traveling record and the next insurance premium based on the current traveling record. Processing related to the second server 10B will be described in detail with reference to Fig. 18.

Fig. 18 is a flowchart illustrating an example of insurance premium determination processing according to the first embodiment. In the example illustrated in Fig. 18, in step S202, the second reception unit 406B of the second server 10B receives various types of information. The various types of information include the driver information and the event-related information, as well as the location-related information and the like as needed.

In step S204, various types of data are acquired by the second acquisition unit 412B, and the determination unit 416 identifies the status of the driving status of the driver based on the transition of the event.

In step S206, the determination unit 416 identifies the status-specific risk set for the corresponding status (see Fig. 11).

In step S208, the determination unit 416 calculates a traveling distance risk for the corresponding status (see Fig. 11).

In step S210, the determination unit 416 calculates a traveling time risk for the corresponding status (see Fig. 11).

In step S212, the determination unit 416 calculates a driving score by using an original or known calculation equation. The driving score is a parameter determined according to an acceleration and the like. It is to be noted that the determination unit 416 may also calculate a driving score for the corresponding status and multiply the driving score by the coefficient for the corresponding status-specific risk to calculate a total driving score.

In step S214, the determination unit 416 determines an insurance premium for the driver based on the driver information and/or the event information. The determination unit 416 may determine the insurance premium further based on the location-related information and the like.

In step S216, the second transmission unit 404B transmits the insurance premium information to the processing terminal 20. Further, the traveling record risk and the driving score may also be transmitted together.

According to the processing described above, by identifying the risk corresponding to the status of commercial use or private use for the driver U who drives the vehicle 30 or the vehicle 30, it is possible to determine a common insurance premium without the driver being aware of whether it is for commercial use or private use. Further, the insurance company can apply a type of insurance in common to one vehicle that is for commercial or private use, and can effectively utilize the server resources managed and operated by the company with the insurance being not complicated, resulting in reducing the increase in management costs.

[Second Embodiment]

Next, a second embodiment will be described. The second embodiment is an example in which the insurance management system is applied to a delivery system such as Uber Eats or messenger. A driver uses a vehicle (automobile, motorcycle, etc.) privately or commercially as in the first embodiment. Therefore, the above-mentioned determination method is used to determine an insurance premium for the driver or the vehicle in either private use or commercial use.

<Configuration of Second Embodiment>

The system configuration, the hardware configuration of the information processing device, and the functional configurations of the server and the terminal, according to the second embodiment, are basically the same as those of the first embodiment described above.

In the second embodiment, the contents of the events are replaced with the events for the delivery system. For example, the events include starting application, setting delivery item and delivery destination, picking-up delivery item, completing delivery, ending application, and the like. The status between events in this case may be, for example, as follows.

Before "starting application" event: private status

From "starting application" event to "setting delivery destination and delivery item" event: waiting status

From "setting delivery destination and delivery item" event to "picking up delivery item" event: pick up status

From "picking up delivery item" event to "completing delivery" event: delivering status

From "completing delivery" event to "setting delivery destination and delivery item" or "ending application" event: waiting status

After "ending application" event: private status

The determination unit 416 identifies the risk for each of the above-mentioned statuses and determines an insurance premium for the driver or the vehicle.

<Operation Processing of Second Embodiment>

The processing according to the second embodiment is basically the same as the processing illustrated in Figs. 17 and 18. It is to be noted that, in the second embodiment, although the contents of the events are different from those of the first embodiment, each status based on the event transition is the same, so that the insurance premium determination method of the first embodiment can be applied.

According to the second embodiment, the delivery system using a vehicle that can be switched to either private use or commercial use also has the same advantageous effect as that of the first embodiment.

[Third Embodiment]

Next, a third embodiment will be described. The third embodiment is an example in which the insurance management system is applied to a vehicle allocation system such as for taxies. In the third embodiment, a third information processing device (third server) 10C (not illustrated) that manages the allocation of transportation vehicles such as taxies is inserted between the first information processing device (first server) 10A and the second information processing device (second server) 10B in the insurance management system 1, which is the example illustrated in Fig. 1. The third server 10C is connected to the network so that data communication is possible.

In this case, when a vehicle allocation management company that manages the third server 10C receives a request to allocate a vehicle, a vehicle (e.g., a taxi) located near the requester is set. The vehicle transmits various types of data to the first server 10A managed by the company that owns the vehicle (vehicle management company). The various types of data (location-related information, etc.) are acquired by a digital recorder and a digital tachograph.

The event may be an event recognized by the driver operating the digital recorder or the digital tachograph, or may be an event recognized by an operation from an operator of the vehicle allocation management company or the vehicle management company. Information on such an event is transmitted to the second server 10B. The event information may be transmitted in association with the driver information.

In this way, the second server 10B determines an insurance premium for the driver or the vehicle 30 by acquiring the driver information, the event information, and related information as needed. It is to be noted that, for the vehicle 30 being a taxi or the like, since the ownership of the vehicle 30 is not the driver but the vehicle management company, the insurance premium is determined for the vehicle 30. Since the contents of the events are basically the same as those of the first embodiment, the same method as that of the first embodiment can be used as the insurance premium determination method according to the third embodiment.

<Configuration of Third Embodiment>

The system configuration, the hardware configuration of the information processing device, and the functional configurations of the server and the terminal, according to the third embodiment, are basically the same as those of the first embodiment described above.

In the third embodiment, although the third server 10C is added as the subject that transmits the event information, the processing of the third server 10C is basically the same as that of the first embodiment. For example, the determination unit 416 identifies the risk for each status of the vehicle 30 used in the vehicle allocation system and determines an insurance premium for the driver or the vehicle.

<Operation Processing of Third Embodiment>

The processing according to the third embodiment is basically the same as the processing illustrated in Figs. 17 and 18. It is to be noted that, in the third embodiment, although the third server 10C is added as the subject that transmits the event information as described above, each status based on the event transition is the same, so that the insurance premium determination method of the first embodiment can be applied.

According to the third embodiment, the vehicle allocation system using a vehicle that can be switched to either private use or commercial use also has the same advantageous effect as that of the first embodiment.

[Modifications]

In each embodiment that uses a vehicle that can be switched to either private use or commercial use as described above, the insurance premium may be reviewed and determined to be paid, for example, monthly instead of annually. In this case, when the insurance premium for the next period is determined, if it is lower than the monthly insurance premium having been paid, the second server 10B may refund to the driver a difference between the monthly insurance premium and the determined next insurance premium. It is to be noted that the period for which the insurance premium is to be reviewed is not limited to monthly and may be every few days, weeks, or months.

Further, for the events, the application execution unit 610 may automatically detect the occurrence of an event, in addition to or instead of the occurrence of an event in response to a user operation. For example, the application execution unit 610 detects the occurrence of an event when the location information acquired by the GPS or the like indicates arrival to the boarding location and/or the destination location and that the vehicle has stopped there for a certain time.

Further, since one driver may own or use a plurality of vehicles, or one vehicle may be used by a plurality of drivers (rental), the driver information may include information for identifying each vehicle such as VIN information. In this case, the determination unit 416 may determine a risk serving as a base (hereinafter, also referred to as "base risk") according to a combination of the information for identifying the driver and the information for identifying the vehicle. Further, the determination unit 416 may adjust the base risk by using the status-specific risk identified by a status transitioned based on the event information.

Further, each processing described above may be implemented as a program executed by a computer. This program is installed in the computer, stored in a computer-readable storage medium (e.g., a non-transitory storage medium), and/or executed by a control unit (e.g., a processor) of the computer to perform the processing.

<First Modification>

A first modification is an example in which, when a plurality of passengers are carried, an insurance premium based on a risk corresponding to the number of passengers can be applied to the driver according to the first embodiment and the third embodiment. For example, in the statuses described above in the first embodiment and the third embodiment, if the ride-sharing management application can use Car Pooling for carrying a plurality of passengers, the status of "on board" may be divided according to the number of passengers. For example, when the "boarding" event occurs in the status of "on board", that is, in the state where a passenger is on board, the state becomes that two passengers are on board. In this case, the status-specific risk can be set to increase as the number of passengers increases.

**The** determination unit 416 determines how many passengers are currently on board based on the number of occurrences of the "boarding" event (an event indicating boarding), the number of occurrences of the "dropping" event (an event indicating dropping off), and the order of these events as needed, after the first transition to the "on board" status. Next, the determination unit 416 may determine the status-specific risk according to the determined number of passengers. For example, in respect of the status of "on board", when the status transitions to the status of "on board", the determination unit 416 grasps the number of passengers as follows.

P (number of passengers) = number of occurrences of "boarding" event + 1 - number of occurrences of "dropping" event

However, once P becomes 0, the status becomes "waiting", and the determination unit 416 may stop using the above equation until the status becomes "on board" next time.

The determination unit 416 determines the risk according to the number of passengers identified by the above equation. It is to be noted that a risk can be preset for each number of passengers. In this way, the determination unit 416 can use the status-specific risk corresponding to the number of passengers to determine an insurance premium suitable for the driver or the vehicle that may carry a plurality of passengers.

<Second Modification>

In a second modification, in the case where the driver has registered with a plurality of ride-sharing management applications, the second server 10B acquires various types of data (e.g., the driver-related information and the location-related information) from the first servers 10A that manage the respective ride-sharing services, and determines an insurance premium.

For example, when the driver registers with a plurality of ride-sharing services such as Uber or Lyft and installs a plurality of ride-sharing management applications on the driver's processing terminal 20, the second server 10B identifies for which of the ride-sharing services the received information is provided from the corresponding company. For example, the second server 10B identifies the transmission sources of various types of data by using the identification information of the first servers 10A, company IDs appended to the various types of data, and the like. Next, the second server 10B manages the statuses according to the identified ride-sharing service and determines an insurance premium.

At this time, the determination unit 416 gives priority to the ride-sharing service in which the status transitions, for example, gives priority to the event information related to commercial use over the event information related to private use. The determination unit 416 determines an insurance premium according to the status transitioned based on the preferential event information in commercial use. For example, when a ride-sharing service A and a ride-sharing service B can be identified on the second server 10B side and the status transitions in the ride-sharing service B, the determination unit 416 may determine that the ride-sharing service B is in use (in commercial use) by the driver, and determine an insurance premium for this driver or the vehicle based on this transition of the status. In this way, on the second server 10B side, the actual status of the driver can be identified, so that it is possible to determine a suitable insurance premium.

<Third Modification>

In a third modification, the information processing device 20 used by the driver executes at least part of the processing of the first information processing device 10A and the second information processing device 10B. For example, the control unit 202 of the information processing device 20 executes processing of acquiring the event information and/or the driver information output from the ride-sharing management application. Further, the control unit 202 of the information processing device 20 can execute the processing of the determination unit 416 illustrated in Fig. 8.

In this case, the control unit 202 of the information processing device 20 may determine, based on the events indicating starting and ending the ride-sharing management application used by the driver, which are included in the event information, whether it is in commercial use or private use and use the risk based on the commercial use and the risk based on the private use to determine an insurance premium for the driver identified by the driver information or the vehicle 30.

Further, the control unit 202 of the information processing device 20 may be configured to transmit the information related to the determined insurance premium to the second information processing device 10B via the communication interface 204. Further, the control unit 202 of the information processing device 20 can execute part of the processing of the first information processing device 10A and the second information processing device 10B, as needed. Further, the program for determining the risk and determining an insurance premium, which is to be executed in the information processing device 20, may be updated by an update program transmitted from an external device such as the first information processing device 10A or the second information processing device 10B.

According to the third modification, the information processing device 20 used by the driver can determine a suitable insurance premium in response to the start of the ride-sharing management application.

Reference Signs List

| | |
|---|---|
| 1 | Insurance management system |
| 10 | Information processing device (server) |
| 20 | Information processing device (processing terminal) |
| 30 | Vehicle |
| 102 | Control unit |
| 104 | Communication interface |
| 106 | Storage unit |
| 202 | Control unit |
| 206 | Communication interface |
| 208 | Storage unit |
| 214 | Display unit |
| 216 | Input unit |
| 220 | Microphone |
| 222 | Speaker |
| 224 | Sensor |
| 402A | First communication unit |
| 408A | First storage unit |
| 410A | First application control unit |
| 412A | First acquisition unit |
| 414A | Transfer unit |
| 402B | Second communication unit |
| 408B | Second storage unit |
| 410B | Second application control unit |
| 412B | Second acquisition unit |
| 416 | Determination unit |
| 602 | Third communication unit |
| 608 | Third storage unit |
| 610 | Application execution unit |
| 616 | Sensor unit |

[DRAWINGS]

[Fig. 1]

| | |
|---|---|
| 10A | FIRST INFORMATION PROCESSING DEVICE |
| 10B | SECOND INFORMATION PROCESSING DEVICE |

[Fig. 2]

| | |
|---|---|
| 102 | CONTROL UNIT |
| 104 | COMMUNICATION INTERFACE |
| 106 | STORAGE UNIT |
| 108 | CONTROL PROGRAM |
| 110 | INFORMATION STORAGE UNIT |

[Fig. 3]

| 202 | CONTROL UNIT |
| 206 | COMMUNICATION INTERFACE |
| 208 | STORAGE UNIT |
| 210 | APPLICATION PROGRAM |
| 212 | INFORMATION STORAGE UNIT |
| 214 | DISPLAY UNIT |
| 216 | INPUT UNIT |
| 220 | MICROPHONE |
| 222 | SPEAKER |
| 224 | SENSOR |

[Fig. 4]

402A FIRST COMMUNICATION UNIT
404A FIRST TRANSMISSION UNIT
406A FIRST RECEPTION UNIT
408A FIRST STORAGE UNIT
DRIVER INFORMATION
LOCATION-RELATED INFORMATION
EVENT-RELATED INFORMATION
410A FIRST APPLICATION CONTROL UNIT
412A FIRST ACQUISITION UNIT
414A TRANSFER UNIT

[Fig. 5]

PERSONAL ID
NAME
AGE
ADDRESS

[Fig. 6]

PERSONAL ID
TIME OF DAY
SPEED
LATITUDE
LONGITUDE

[Fig. 7]

PERSONAL ID
TIME OF DAY
EVENT

[Fig. 8]

402B SECOND COMMUNICATION UNIT
404B SECOND TRANSMISSION UNIT
406B SECOND RECEPTION UNIT
408B SECOND STORAGE UNIT
DRIVER INFORMATION
ACCELERATION-RELATED INFORMATION
STATUS-RELATED INFORMATION
410B SECOND APPLICATION CONTROL UNIT
412B SECOND ACQUISITION UNIT

416 DETERMINATION UNIT

[Fig. 9]

PERSONAL ID
TIME OF DAY
SPEED
LATITUDE
LONGITUDE
ACCELERATION

[Fig. 10]

PERSONAL ID
TIME OF DAY
EVENT
TRAVELING DISTANCE
TRAVELING TIME
STATUS

[Fig. 11]
STATUS

a) TRAVELING DISTANCE (km)
b) TRAVELING TIME (min)
c) STATUS-SPECIFIC RISK

[Fig. 12]

d) TRAVELING DISTANCE RISK
COEFFICIENT

[Fig. 13]

e) DRIVING TIME RISK
COEFFICIENT

[Fig. 14]

SCORE
SCORE COEFFICIENT

[Fig. 15]

602    THIRD COMMUNICATION UNIT
604    THIRD TRANSMISSION UNIT
606    THIRD RECEPTION UNIT
608    THIRD STORAGE UNIT
610    APPLICATION EXECUTION UNIT
612    OPERATION RECEPTION UNIT
614    DISPLAY CONTROL UNIT
616    SENSOR UNIT

[Fig. 16]

TRAVELING DISTANCE RISK
TRAVELING TIME RISK
TRAVELING SCORE

NEXT MONTH'S INSURANCE PREMIUM

[Fig. 17]

| | |
|---|---|
| 20 | PROCESSING TERMINAL |
| 10A | FIRST SERVER |
| 10B | SECOND SERVER |
| S102 | LOGIN |
| S104 | TRANSMIT DRIVER INFORMATION |
| S106 | TRANSMIT LOCATION-RELATED INFORMATION |
| S108 | EVENT OCCURRING |
| S110 | TRANSMIT EVENT-RELATED INFORMATION |
| S112 | TRANSMIT VARIOUS TYPES OF INFORMATION |
| S114 | DETERMINE INSURANCE PREMIUM |
| S116 | TRANSMIT INSURANCE PREMIUM INFORMATION |
| S118 | DISPLAY INSURANCE PREMIUM INFORMATION |

[Fig. 18]

START

| | |
|---|---|
| S202 | RECEIVE VARIOUS TYPES OF INFORMATION |
| S204 | IDENTIFY STATUS |
| S206 | IDENTIFY STATUS-SPECIFIC RISK |
| S208 | CALCULATE TRAVELING DISTANCE RISK |
| S210 | CALCULATE TRAVELING TIME RISK |
| S212 | CALCULATE DRIVING SCORE |
| S214 | DETERMINE INSURANCE PREMIUM |
| S216 | TRANSMIT INSURANCE PREMIUM INFORMATION |

END

**Claims**

1. An information processing device comprising:

   a reception unit that receives event information including an event indicating a driving status of a driver and driver information related to the driver, in one of commercial use and private use of a vehicle; and
   a determination unit that

   determines determine, based on events which indicate starting and ending of an application for managing the commercial use transmitted from a processing terminal used by the driver and which are included in the event information, whether the vehicle is in commercial use or private use, and
   uses a risk based on the commercial use and a risk based on the private use to determine an insurance premium for the driver identified by the driver information or for the vehicle.

2. The information processing device according to claim 1, further comprising a transmission unit that transmits insurance premium information indicating the determined insurance premium to the processing terminal, wherein

   the commercial use includes a plurality of different events, and
   the determination unit sets different risks to be applicable to statuses between the events.

3. The information processing device according to claim 1 or 2, wherein

   the reception unit receives location-related information which is associated with the driver information and which includes at least one of time information indicating a time of day at a predetermined time point, speed information indicating a speed of the vehicle at the predetermined time point, and location information indicating a location at the predetermined time point, and
the determination unit determines the risk further based on the location-related information.

4. The information processing device according to any one of claims 1 to 3, wherein

the driver information includes attribute information including at least one of an age, gender, and address of the driver, and
the determination unit determines the risk further based on the attribute information.

5. The information processing device according to any one of claims 1 to 4, wherein

the vehicle is a vehicle owned or used by the driver or a vehicle used for ride sharing, and
the insurance premium is an insurance premium to be paid by the driver.

6. The information processing device according to claim 3, wherein the determination unit uses a driving score of the driver calculated based on the time information and the speed information which are included in the location-related information to determine the insurance premium.

7. The information processing device according to claim 6, wherein the driving score is calculated further based on the event information.

8. The information processing device according to any one of claims 1 to 7, wherein the determination unit identifies the number of passengers according to the number of occurrences of an event indicating boarding and the number of occurrences of an event indicating alighting, included in the event information, and determines the risk based on the identified number of passengers.

9. The information processing device according to any one of claims 1 to 8, wherein, when the event information is received, for a predetermined driver, from each of different transmission sources, the determination unit preferentially uses the event information related to the commercial use to determine the insurance premium.

10. An information processing method performed by an information processing device, the information processing method comprising:

receiving event information including an event indicating a driving status of a driver and driver information related to the driver, in one of commercial use and private use of a vehicle;
determining, based on events which indicate starting and ending of an application for managing the commercial use transmitted from a processing terminal used by the driver and which are included in the event information, whether the vehicle is in commercial use or private use; and
using a risk based on the commercial use and a risk based on the private use to determine an insurance premium for the driver identified by the driver information or for the vehicle.

11. A program causing an information processing device to execute:

receiving event information including an event indicating a driving status of a driver and driver information related to the driver, in one of commercial use and private use of a vehicle;
determining, based on events which indicate starting and ending of an application for managing the commercial use transmitted from a processing terminal used by the driver and which are included in the event information, whether the vehicle is in commercial use or private use; and
using a risk based on the commercial use and a risk based on the private use to determine an insurance premium for the driver identified by the driver information or for the vehicle.

12. A program causing an information processing device to execute:

acquiring event information including an event indicating a driving status of a driver and driver information related to the driver, in one of commercial use and private use of a vehicle;
transmitting the acquired event information and driver information to a first server that manages the commercial use;
determining, based on events which indicate starting and ending of an application for managing the commercial use and which are included in the event information transmitted from the first server, whether the vehicle is in commercial use or private use;

using a risk based on the commercial use and a risk based on the private use to receive insurance premium information related to insurance premium from a second server determining the insurance premium for the driver identified by the driver information or for the vehicle; and

controlling display of the received insurance premium information on a screen.

13. An information processing method performed by an information processing device, the information processing method comprising:

acquiring, from an application executable by the information processing device for managing commercial use of a vehicle, event information including an event indicating a driving status of a driver and driver information related to the driver, in one of the commercial use and private use of the vehicle;

determining, based on events which indicate starting and ending of the application used by the driver and which are included in the event information, whether the vehicle is in commercial use or private use; and

using a risk based on the commercial use and a risk based on the private use to determine an insurance premium for the driver identified by the driver information or for the vehicle.

# Fig. 1

1

# Fig. 2

10

112

| 102 | 106 |
|---|---|
| CONTROL UNIT | STORAGE UNIT 108 |
| 104 | CONTROL PROGRAM |
| COMMUNICATION INTERFACE | INFORMATION STORAGE UNIT 110 |

# Fig. 3

20

| 202 | 218 | 208 |

CONTROL UNIT

RAM

204

STORAGE UNIT

APPLICATION PROGRAM — 210

INFORMATION STORAGE UNIT — 212

206 — COMMUNICATION INTERFACE

214 — DISPLAY UNIT

220 — MICROPHONE

216 — INPUT UNIT

222 — SPEAKER

224 — SENSOR

# Fig. 4

EP 4 012 643 A1

**Fig. 5**

| PERSONAL ID | VIN No. | NAME | AGE | ADDRESS | ・・・ |
|---|---|---|---|---|---|
| 0001 | At1n・・・ | AAB | 30 | C | ・・・ |
| 0002 | B4th・・・ | BBC | 24 | N | ・・・ |
| ・・・ | ・・・ | ・・・ | ・・・ | ・・・ | ・・・ |

25

# Fig. 6

| PERSONAL ID | TIME OF DAY | SPEED | LATITUDE | LONGITUDE |
|---|---|---|---|---|
| XXXXX | 2019/05/01 02:42:34 | 0.0 | xxx.xx | xxx.xx |
| XXXXX | 2019/05/01 02:42:35 | 10.0 | xxx.xx | xxx.xx |
| XXXXX | 2019/05/01 02:42:36 | 0.0 | xxx.xx | xxx.xx |
| XXXXX | 2019/05/01 02:42:37 | 0.0 | xxx.xx | xxx.xx |
| XXXXX | 2019/05/01 02:42:38 | 17.0 | xxx.xx | xxx.xx |
| XXXXX | 2019/05/01 02:42:39 | 22.0 | xxx.xx | xxx.xx |

# Fig. 7

| PERSONAL ID | TIME OF DAY | EVENT |
|---|---|---|
| XXXXX | 2019/05/01 02:42:33 | 1.app on |
| XXXXX | 2019/05/01 03:34:43 | 2.booking |
| XXXXX | 2019/05/01 04:35:41 | 3.passenger boarding |
| XXXXX | 2019/05/01 05:22:01 | 4.dropping |
| XXXXX | 2019/05/01 06:14:26 | 2.booking |
| XXXXX | 2019/05/01 06:59:03 | 3.passenger boarding |

# Fig. 8

10B

402B

SECOND COMMUNICATION UNIT

404B SECOND TRANSMISSION UNIT

406B

SECOND RECEPTION UNIT

410B

SECOND APPLICATION CONTROL UNIT

412B SECOND ACQUISITION UNIT

416

DETERMINATION UNIT

408B

SECOND STORAGE UNIT

DRIVER INFORMATION

ACCELERATION-RELATED INFORMATION

STATUS-RELATED INFORMATION

...

**Fig. 9**

| PERSONAL ID | TIME OF DAY | SPEED | LATITUDE | LONGITUDE | ACCELERATION |
|---|---|---|---|---|---|
| XXXXX | 2019/05/01 02:42:34 | 0.0 | xxx.xx | xxx.xx | 0.0 |
| XXXXX | 2019/05/01 02:42:35 | 10.0 | xxx.xx | xxx.xx | 2.8 |
| XXXXX | 2019/05/01 02:42:36 | 0.0 | xxx.xx | xxx.xx | −2.8 |
| XXXXX | 2019/05/01 02:42:37 | 7.0 | xxx.xx | xxx.xx | 1.9 |
| XXXXX | 2019/05/01 02:42:38 | 17.0 | xxx.xx | xxx.xx | 2.8 |
| XXXXX | 2019/05/01 02:42:39 | 22.0 | xxx.xx | xxx.xx | 1.4 |

# Fig. 10

| PERSONAL ID | TIME OF DAY | EVENT | TRAVELING DISTANCE | TRAVELING TIME | STATUS |
|---|---|---|---|---|---|
| XXXXX | 2019/05/01 02:42:33 | 1.app on | 0 | 0 | private |
| XXXXX | 2019/05/01 03:34:43 | 2.booking | 8 | 52 | waiting |
| XXXXX | 2019/05/01 04:35:41 | 3.passenger boarding | 3 | 61 | picking up |
| XXXXX | 2019/05/01 05:22:01 | 4.dropping | 4 | 46 | on board |
| XXXXX | 2019/05/01 06:14:26 | 2.booking | 2 | 52 | waiting |
| XXXXX | 2019/05/01 06:59:03 | 3.passenger boarding | 5 | 45 | picking up |

# Fig. 11

| STATUS | a) TRAVELING DISTANCE (km) | b) TRAVELING TIME (min) | c) STATUS-SPECIFIC RISK | d) c) * a) | e) c) * b) |
|---|---|---|---|---|---|
| private | 699 | 5,596 | 1.0 | 699 | 5,596 |
| waiting | 2,001 | 15,890 | 1.3 | 2,601 | 20,657 |
| picking up | 1,461 | 11,984 | 1.5 | 2,192 | 17,976 |
| on board | 1,437 | 10,909 | 1.2 | 1,724 | 13,091 |
| total | 5,598 | 44,379 | – | 7,216.2 | 57,320 |

# Fig. 12

| d) TRAVELING DISTANCE RISK | COEFFICIENT |
|---|---|
| 10,000−9,000 | 1.3 |
| 9,000−8,000 | 1 |
| 8,000−5,000 | 0.9 |
| 5,000−3,000 | 0.8 |
| 3,000−0 | 0.5 |

# Fig. 13

| e) DRIVING TIME RISK | COEFFICIENT |
|---|---:|
| 50,000−40,000 | 1.3 |
| 40,000−20,000 | 1 |
| 20,000−10,000 | 0.9 |
| 10,000−5,000 | 0.8 |
| 5,000−0 | 0.5 |

# Fig. 14

| SCORE | SCORE COEFFICIENT |
|---|---|
| 100−90 | 0.8 |
| 90−80 | 1 |
| 80−50 | 1.1 |
| 50−30 | 1.2 |
| 30− | 1.5 |

# Fig. 15

## Fig. 16

TRAVELING DISTANCE RISK

| 0.9 |

TRAVELING TIME RISK

| 1 |

TRAVELING SCORE

| 95 |

NEXT MONTH'S INSURANCE PREMIUM

| ¥94,000 |

**Fig. 17**

EP 4 012 643 A1

# Fig. 18

```
            ( START )
                │
                ▼
   ┌─────────────────────────┐
   │   RECEIVE VARIOUS       │ ～ S202
   │ TYPES OF INFORMATION    │
   └─────────────────────────┘
                │
                ▼
   ┌─────────────────────────┐
   │     IDENTIFY STATUS     │ ～ S204
   └─────────────────────────┘
                │
                ▼
   ┌─────────────────────────┐
   │IDENTIFY STATUS-SPECIFIC RISK│ ～ S206
   └─────────────────────────┘
                │
                ▼
   ┌─────────────────────────┐
   │   CALCULATE TRAVELING   │ ～ S208
   │     DISTANCE RISK       │
   └─────────────────────────┘
                │
                ▼
   ┌─────────────────────────┐
   │CALCULATE TRAVELING TIME RISK│ ～ S210
   └─────────────────────────┘
                │
                ▼
   ┌─────────────────────────┐
   │  CALCULATE DRIVING SCORE│ ～ S212
   └─────────────────────────┘
                │
                ▼
   ┌─────────────────────────┐
   │DETERMINE INSURANCE PREMIUM│ ～ S214
   └─────────────────────────┘
                │
                ▼
   ┌─────────────────────────┐
   │   TRANSMIT INSURANCE    │ ～ S216
   │  PREMIUM INFORMATION    │
   └─────────────────────────┘
                │
                ▼
            (  END  )
```

**INTERNATIONAL SEARCH REPORT**

| International application No. |
| --- |
| PCT/JP2020/024620 |

A. CLASSIFICATION OF SUBJECT MATTER
Int. Cl. G06Q40/08(2012.01)i
FI: G06Q40/08

According to International Patent Classification (IPC) or to both national classification and IPC

B. FIELDS SEARCHED

Minimum documentation searched (classification system followed by classification symbols)
Int. Cl. G06Q40/08

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2011-13719 A (NOMURA RESEARCH INSTITUTE, LTD.) 20 January 2011, entire text, all drawings | 1-13 |
| A | JP 2015-138406 A (NIPPON REGISTRY AUTHENTICATION INC.) 30 July 2015, entire text, all drawings | 1-13 |
| A | JP 2007-257326 A (TOYOTA MOTOR CORP.) 04 October 2007, entire text, all drawings | 1-13 |
| A | JP 2002-297910 A (AIOI INSURANCE CO., LTD.) 11 October 2002, entire text, all drawings | 1-13 |

☒ Further documents are listed in the continuation of Box C. ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04.08.2020 | 11.08.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/024620

C (Continuation).   DOCUMENTS CONSIDERED TO BE RELEVANT

| Category* | Citation of document, with indication, where appropriate, of the relevant passages | Relevant to claim No. |
|---|---|---|
| A | 米国ライドシェア保険と保険市場の拡大 [online], 18 December 2015, Internet: <URL:https://www.uber.com/ja-JP/blog/insurance/> [retrieved: 04 August 2020], entire text, all drawings, non-official translation (U.S. Rideshare Insurance and Expansion of Insurance Market.) | 1-13 |

Form PCT/ISA/210 (continuation of second sheet) (January 2015)

## INTERNATIONAL SEARCH REPORT
Information on patent family members

| International application No. |
| --- |
| PCT/JP2020/024620 |

| Patent Documents referred to in the Report | Publication Date | Patent Family | Publication Date |
| --- | --- | --- | --- |
| JP 2011-13719 A | 20.01.2011 | (Family: none) | |
| JP 2015-138406 A | 30.07.2015 | (Family: none) | |
| JP 2007-257326 A | 04.10.2007 | (Family: none) | |
| JP 2002-297910 A | 11.10.2002 | (Family: none) | |

Form PCT/ISA/210 (patent family annex) (January 2015)

**EP 4 012 643 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9505494 B